# EUROPÄISCHE PATENTSCHRIFT

(11) **EP 3 411 184 B1**
(45) Veröffentlichungstag und Bekanntmachung des Hinweises auf die Patenterteilung: **01.01.2020**
(21) Anmeldenummer: 17700944.6
(22) Anmeldetag: 16.01.2017
(51) Int. Cl.: B24B 33/02, B24B 27/00, B23Q 39/02

(54) **HONMASCHINE MIT MEHREREN ARBEITSSTATIONEN**
HONING MACHINE WITH MULTIPLE WORKSTATIONS
MACHINE DE PIERRAGE COMPORTANT UNE PLURALITÉ DE POSTES DE TRAVAIL

(30) Priorität: 01.02.2016 DE 102016201456
(43) Veröffentlichungstag der Anmeldung: 12.12.2018
(73) Patentinhaber: Nagel Maschinen- und Werkzeugfabrik GmbH, 72622 Nürtingen (DE)
(72) Erfinder: NAGEL, Bernd, 72622 Nürtingen (DE)
(74) Vertreter: Patentanwälte Ruff, Wilhelm, Beier, Dauster & Partner mbB
(86) Internationale Anmeldenummer: PCT/EP2017/050782
(87) Internationale Veröffentlichungsnummer: WO 2017/133887

(56) Entgegenhaltungen:
- CH-A5- 689 938
- DE-A1-102007 045 619
- DE-A1-102012 201 730
- US-A- 2 111 784

## Beschreibung

Die Erfindung bezieht sich auf eine Honmaschine zur Durchführung von Honoperationen an orthogonal zueinander ausgerichteten Bohrungen in einem Werkstück, insbesondere zur Honbearbeitung von Zylinderbohrungen und einer Lagergassenbohrung in einem Zylinderkurbelgehäuse.

Das Zylinderkurbelgehäuse (ZKG), welches oft auch schlicht als "Kurbelgehäuse" oder "Motorblock" bezeichnet wird, ist integraler Bestandteil von Verbrennungsmotoren bzw. Brennkraftmaschinen, wie sie beispielsweise in Personen- oder Lastkraftwagen, Flugzeugen, Schiffen oder stationären Anlagen Einsatz finden. Die am weitesten verbreitete Bauform sind Mehrzylindermotoren, deren Kolben über Pleuel mit der rotierenden Kurbelwelle verbunden sind, die die vom Motor erzeugte Kraft an Räder, Schiffsschrauben, Propeller, Generatoren oder dergleichen weiterleitet.

Das Zylinderkurbelgehäuse ist ein Beispiel für ein Werkstück mit orthogonal zueinander ausgerichteten Bohrungen.

Innerhalb des Motorblocks liegen mehrere Zylinderbohrungen in gerader Reihe nebeneinander. Die Kurbelwelle liegt in Reihen- oder V-Motoren unterhalb, in einem Boxermotor zwischen den Zylindern und stützt sich am Zylinderkurbelgehäuse in den Lagerstellen der Kurbelwellenlagerbohrung ab. Die Lagerstellen sind in der Regel als Gleitlager, gegebenenfalls auch als Wälzlager ausgeführt. Um einen hohen Rundlauf der Kurbelwelle zu gewährleisten und damit unerwünschte Verschleißerscheinungen und Schwingungen im Betrieb zu minimieren, muss die Kurbelwelle hohen Formtoleranzanforderungen entsprechen. Auch die Lagerstellen sind hinsichtlich ihrer Größe und Lage im Zylinderkurbelgehäuse eng toleriert.

Die relativ engen Toleranzen der maßgebenden Teile eines Verbrennungsmotors und eines Zylinderkurbelgehäuses ergeben sich aus den komplexen Funktionen dieser Teile. Die Form, das Maß und die Oberflächentopografie der Zylinderbohrung bestimmen dabei maßgeblich den Verschleiß, die Reibung, den Ölverbrauch und die Emissionswerte des Verbrennungsmotors sowie, als Folge der Reibung, auch die Leistung und den Wirkungsgrad. Das komprimierte Brennraumvolumen bestimmt vor allem die Verdichtung des Motors. Diese hat Auswirkungen auf die Leistung und durch den Verbrennungsverlauf auch Einfluss auf die Emissionswerte sowie auf Motorgeräusche.

Die exakte Position der Kurbelwelle relativ zu den Kolben bzw. zu den Zylinderbohrungen ist unter anderem wichtig zur Verschleißminderung an den hoch belasteten Motorteilen. Das sind insbesondere Kolben/Kolbenbolzen, Pleuel sowie Lager des Pleuels auf der Kurbelwelle als auch die Lagerung der Kurbelwelle im Zylinderkurbelgehäuse. Bei der Position der Bohrungsachse spielt nicht nur die absolute Position im Raum, sondern auch ihre Winkellage bzw. Orientierung eine Rolle. Beispielsweise laufen bei Schaltgetrieben mit Kupplung die Kurbelwelle und die Eingangswelle des Getriebes gemeinsam. Daher ist hier eine Koaxialität der beiden Wellen entscheidend für eine hohe Lebensdauer.

Die DE 10 2007 045 619 A1 beschreibt eine Vorrichtung zur Feinbearbeitung von Werkstücken, vorzugsweise zum Honen und/oder Feinbohren von Zylinderbohrungen in Kurbelgehäusen von Verbrennungsmotoren, bei der innerhalb eines Moduls an zwei einander gegenüberliegenden Längsseiten je eine oder zwei horizontal verschiebbare Bearbeitungseinheiten zum Honen und/oder Feinbohren vorgesehen sind. Jede Bearbeitungseinheit weist eine Spindel, einen Antrieb zur Erzeugung der oszillierenden Hubbewegung der Spindel und zur Verschiebung der Bearbeitungseinheit in Arbeitsposition, eine Werkzeugaufnahme mit starrer Achse und eine Zustelleinrichtung zur radialen Zustellung der Bearbeitungswerkzeuge auf. Zwischen den mit den Bearbeitungseinheiten bestückten Längsseiten ist ein von einer Stirnseite zugänglicher Serviceraum vorgesehen, wobei den Bearbeitungseinheiten an der hinteren Stirnseite des Moduls mindestens ein Werkzeugmagazin zugeordnet ist. Eine Ausführungsform (Fig. 10) ist zur Komplettbearbeitung von Kurbelgehäusen ausgelegt, zum Beispiel zum Vorhonen einer Zylinderbohrung und gleichzeitiger Bearbeitung der Kurbelwellenbohrung. Das Ausführungsbeispiel hat eine waagerechte Bearbeitungseinheit, die horizontal verschiebbar ist und zur Bearbeitung der miteinander fluchtend angeordneten Bohrungsabschnitte dient, die bei einem Kurbelgehäuse die Lager für die Kurbelwelle aufnehmen.

Die DE 10 2012 201 730 A1 beschreibt eine Honmaschine zur Durchführung von Honoperationen an mindestens einer Bohrung in einem Werkstück, insbesondere zur Honbearbeitung von Zylinderbohrungen in einem Zylinderkurbelgehäuse. Die Honmaschine hat eine Maschinenbasis, mehrere im Randbereich der Maschinenbasis angeordnete vertikale Ständer und ein von den Ständern getragenes Maschinenoberteil, das mit Abstand oberhalb der Maschinenbasis angeordnet ist. Weiterhin ist ein auf der Maschinenbasis angeordneter Rundtisch vorgesehen, der um eine vertikale Rundtischachse drehbar ist und mehrere Werkstückaufnahmen aufweist, die mit radialem Abstand zur Rundtischachse in Umfangsrichtung zueinander versetzt derart angeordnet sind, dass ein in einer Werkstückaufnahme aufgenommenes Werkstück durch Drehung des Rundtischs nacheinander an unterschiedliche Arbeitsstationen der Honmaschine transportierbar ist. Mindestens eine der Arbeitsstationen ist eine Honstation, die mindestens eine von dem Maschinenoberteil getragene Honeinheit aufweist, welche eine Honspindel hat, die um eine vertikale Spindelachse drehbar und parallel zur Spindelachse hin und her bewegbar ist.

Die Patentschrift CH 689 938 A5 beschreibt einen Mehrfacharbeitsplatz für eine spanabhebende Werkzeugmaschine zum Drehen, Fräsen und Schleifen mit mehreren Achsen. Der Mehrfacharbeitsplatz hat mehrere unabhängige Arbeitseinheiten, die mit einem Werkzeug bestückt werden können, um diesem eine Arbeitsbewegung oder Vorwärtsbewegung zu erteilen. Die Arbeitseinheiten werden von einer bogenförmigen tragenden Struktur getragen, deren konkave Seite nach unten weist. Die Anordnung ist so getroffen, dass unterhalb der Zone, in der das Werkstück angeordnet ist, während keiner Bearbeitungsphase funktionelle Teile der Maschine angeordnet sind, die einer Relativbewegung relativ zueinander unterworfen sind.

### AUFGABE UND LÖSUNG

Es ist eine Aufgabe der Erfindung, eine Honmaschine bereitzustellen, mit der orthogonal zueinander ausgerichtete Bohrungen in einem Werkstück, z.B. Zylinderbohrungen und eine Lagergassenbohrung in einem Zylinderkurbelgehäuse, innerhalb einer kurzen Gesamtbearbeitungszeit mit hoher Präzision in einem sicheren Prozess komplett mittels Honen bearbeitet werden können.

Zur Lösung dieser Aufgabe stellt die Erfindung eine Honmaschine mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Der auf der Maschinenbasis angeordnete Rundtisch bildet eine maschineninterne Transfereinheit, mit der ein schneller Transfer der Werkstücke zwischen den einzelnen Arbeitsstationen realisiert werden kann. Durch den maschineninternen Rundtischtransfer ist es möglich, mit einer einzigen Ladestation zum Beladen und Entladen der Werkstückaufnahme auszukommen. Im Gegensatz zu Transfermaschinen ist es also möglich, dass die Werkstücke die Honmaschine an der gleichen Stelle verlassen, an der sie der Honmaschine zugeführt wurden. Dies erleichtert das Be- und Entladen und insbesondere auch die Ankopplung der Honmaschine an ein externes Fördersystem. Mithilfe eines externen Fördersystems kann die Honmaschine bei Bedarf mit anderen Honmaschinen und/oder mit sonstigen Bearbeitungsmaschinen zur Bildung einer Fertigungsanlage verkettet werden.

Mindestens eine der Arbeitsstationen ist eine Vertikal-Honstation. Die Vertikal-Honstation hat mindestens eine Vertikal-Honeinheit, deren Honspindel um eine Spindelachse drehbar ist, die parallel zur (vertikal orientierten) Rundtischachse verläuft. Diese Honspindel ist in Richtung dieser vertikalen Spindelachse hin- und herbewegbar.

In einer Vertikal-Honstation kann somit mindestens eine Bohrung eines ersten Typs bearbeitet werden, die sich dadurch auszeichnet, dass die Bohrungsachse vertikal, bzw. parallel zur Rundtischachse, orientiert ist, wenn das Werkstück fest in der zugeordneten Werkstückaufnahme aufgenommen und in die Bearbeitungsposition gebracht ist.

Zusätzlich ist vorgesehen, dass mindestens eine der Arbeitsstationen eine Horizontal-Honstation ist, die mindestens eine Horizontal-Honeinheit aufweist, welche eine Honspindel hat, die um eine horizontale Spindelachse drehbar und in Richtung dieser Spindelachse hin- und her bewegbar ist. Mithilfe der Horizontal-Honeinheit kann somit mindestens eine Bohrung eines zweiten Typs bearbeitet werden, wobei sich diese Bohrung dadurch auszeichnet, dass ihre Bohrungsachse in horizontaler Richtung, also senkrecht bzw. orthogonal zu Bohrungsachsen des ersten Typs von Bohrungen, ausgerichtet ist. Somit es möglich, mithilfe der Honmaschine orthogonal zueinander ausgerichtete Bohrungen an dem Werkstück zu bearbeiten.

Die Horizontal-Honeinheit ist in Bezug auf den Rundtisch derart positioniert oder positionierbar, dass die Horizontal-Honeinheit eine Arbeitsposition einnimmt, bei der die horizontale Spindelachse radial zur Rundtischachse ausgerichtet ist. Die Arbeitsposition der Horizontal-Honeinheit ist diejenige Position, in der sich die Horizontal-Honeinheit zur Durchführung der mit ihr vorgesehenen Bearbeitungsoperationen befindet. Diese Anordnung der Horizontal-Honeinheit hat unter anderem Vorteile im Hinblick auf den für die Gesamtanordnung erforderlichen Bauraum, so dass Honmaschinen mit kompakter Gesamtgröße realisierbar sind.

Bei einer Weiterbildung ist die Horizontal-Honeinheit auf der Maschinenbasis angeordnet, die auch den Rundtisch trägt. Hierdurch kann eine Anordnung mit großer mechanischer Stabilität realisiert werden, bei der der räumliche Bezug zwischen Horizontal-Honeinheit und Rundtisch besonders zuverlässig hergestellt und aufrechterhalten werden kann. Zudem können die Gesamtabmessungen kompakt gehalten werden. Alternativ wäre es auch möglich, die Horizontal-Honeinheit auf einer von der Maschinenbasis gesonderten Basis unterzubringen, die dann vorzugsweise mit der den Rundtisch tragenden Maschinenbasis fest zu koppeln wäre.

Es ist möglich, dass die Horizontal-Honeinheit an einer festen Position der Maschinenbasis oder einer davon gesonderten Basis montiert ist, so dass sich die Horizontal-Honeinheit permanent in ihrer Arbeitsposition befindet. Hierdurch ergeben sich relativ einfache robuste Varianten. Gemäß einer Weiterbildung ist die Horizontal-Honeinheit dagegen an einem Schlitten angebracht, der senkrecht zur horizontalen Spindelachse horizontal verfahrbar ist. Dadurch kann sich eine erhöhte Flexibilität bei der Nutzung der Horizontal-Honeinheit ergeben.

Es ist bei manchen Varianten vorgesehen, dass der Schlitten zusätzlich zur Horizontal-Honeinheit mindestens eine weitere Funktionseinheit trägt, die im Rahmen des Bearbeitungsprozesses genutzt werden kann. Bei der weiteren Funktionseinheit kann es sich zum Beispiel um eine weitere Horizontal-Honeinheit mit eigener Honspindel handeln. Dadurch wird es beispielsweise möglich, eine horizontal ausgerichtete Bohrung zunächst mit einem von der ersten Horizontal-Honeinheit getragenen ersten Werkzeug zu bearbeiten, nach Abschluss dieser Bearbeitung den Schlitten so zu verfahren, dass die Spindelachse der anderen Horizontal-Honeinheit mit der Bohrungsachse fluchtet, und danach mithilfe der zweiten Horizontal-Honeinheit an der gleichen Bohrung mit einem zweiten Werkzeug eine weitere Honbearbeitung durchzuführen. Auf diese Weise sind beispielsweise eine Vorhonoperation und eine Fertighonoperation nacheinander ohne zwischenzeitliche Umspannung des Werkstücks und ohne Werkzeugwechsel möglich.

Es ist auch möglich, dass es sich bei der weiteren Funktionseinheit um eine Messeinheit handelt, also nicht um eine Bearbeitungseinheit. Mithilfe der Messeinheit kann beispielsweise der Bearbeitungserfolg einer vorhergehenden Honoperation überprüft und die Weiterbearbeitung in Abhängigkeit von dem Messergebnis gesteuert werden. Es ist auch möglich, dass der Schlitten zusätzlich zu der Horizontal-Honeinheit sowohl eine weitere Horizontal-Honeinheit als auch eine Messeinheit trägt. Weiterhin ist es möglich, dass auf den Schienen, die den Schlitten tragen, ein unabhängig verfahrbarer weiterer Schlitten läuft, der die weitere Funktionseinheit trägt.

Für die Befestigung der mindestens einen Vertikal-Honeinheit an einer tragenden Komponente der Honmaschine gibt es unterschiedliche Möglichkeiten.

Es hat sich als günstig herausgestellt, wenn mit festem räumlichen Bezug zur Maschinenbasis ein Maschinenoberteil vorgesehen ist, das mit vertikalem Abstand oberhalb des Rundtisches angeordnet ist, wobei die Vertikal-Honeinheit von dem Maschinenoberteil getragen wird. Der Raum zwischen Maschinenbasis und Maschinenoberteil kann als Arbeitsraum der Honmaschine angesehen werden. Die Befestigung einer Vertikal-Honeinheit am Maschinenoberteil hat gegenüber einer ebenfalls möglichen Befestigung einer Vertikal-Honeinheit an einer mehr oder weniger vertikal ausgerichteten Seitenwand der Honmaschine den Vorteil, dass Konstruktionen möglich sind, die für den Bediener eine bequeme seitliche Zugänglichkeit des Arbeitsraums bieten.

Die vertikal ausgerichtete Honspindel einer Vertikal-Honeinheit kann nach unten in den Arbeitsraum hineinragen, während einige oder alle anderen Komponenten der Honeinheit außerhalb des Arbeitsraums oberhalb des Maschinenoberteils angeordnet sein können. Durch die Portalbauweise kann unter anderem erreicht werden, dass der seitliche Zugang zum Arbeitsraum durch Komponenten der Honeinheit nicht behindert wird.

Bei manchen Ausführungsbeispielen sind mehrere im Randbereich der Maschinenbasis angeordnete vertikale Ständer vorgesehen, die das Maschinenoberteil unmittelbar oder mittelbar tragen. So ist es beispielsweise möglich, das Maschinenoberteil so zu gestalten, dass es direkt auf die oberen Enden von Ständern aufgesetzt und dort montiert werden kann. Es ist auch möglich, dass Paare von seitlich zueinander versetzten Ständern jeweils eine horizontale Traverse tragen, auf welche dann das Maschinenoberteil aufgesetzt wird. Die Anordnung des Maschinenoberteils auf Ständern kann die seitliche Zugänglichkeit des Arbeitsraums verbessern.

Bei manchen Ausführungsformen ist eine Vertikal-Honeinheit an einem Schlitten angebracht, der von dem Maschinenoberteil getragen wird. Der Schlitten ist vorzugsweise an der Oberseite des Maschinenoberteils, also außerhalb des Arbeitsraums angeordnet. Der Schlitten ist vorzugsweise linear entlang einer Verfahrrichtung verfahrbar, welche parallel zu einer die Rundtischachse enthaltenden Vertikalebene liegt, die senkrecht zur horizontalen Spindelachse der Horizontal-Honstation verläuft. Die Anordnung kann dabei so getroffen sein, dass der Schlitten so angeordnet ist, dass die Spindelachsen von durch den Schlitten getragenen Vertikal-Honeinheiten in einer Vertikalebene liegen, die die Rundtischachse enthält. Damit kann die Honspindel der Vertikal-Honeinheit durch Verfahren des Schlittens in einer Radialrichtung bezogen auf die Rundtischachse verfahren werden.

Bei der Bearbeitung von Zylinderkurbelgehäusen ist es bei geeigneter Anordnung des Zylinderkurbelgehäuses in einer Werkstückaufnahme des Rundtisches möglich, mit einer Vertikal-Honspindel nacheinander unterschiedliche Bohrungen des Zylinderkurbelgehäuses zur Bearbeitung anzufahren. Um dies zu ermöglichen, ist bei manchen Ausführungsformen eine Werkstückaufnahme zur Aufnahme eines Zylinderkurbelgehäuses mit mehreren in Reihe angeordneten Zylinderbohrungen mit zueinander parallelen Zylinderachsen derart ausgebildet, dass alle Zylinderachsen in einer die Rundtischachse enthaltenden Vertikalebene liegen. Die Achsen der Zylinderbohrungen liegen dann also in einer Radialrichtung zur Rundtischachse.

Bei einer derartigen Anordnung eines Zylinderkurbelgehäuses ist es dann ohne weitere Lageänderungen des Werkstücks in Bezug auf den Rundtisch möglich, das Zylinderkurbelgehäuse durch Drehung des Rundtischs in eine Bearbeitungsposition zu bringen, in der mithilfe der Horizontal-Honeinheit die Lagergassenbohrung gehont werden kann.

Bei manchen Ausführungsformen ist es möglich, die Orientierung des in der Werkstückaufnahme gehaltenen Werkstücks relativ zum Rundtisch bei fest eingespanntem Werkstück zu verändern. Hierzu kann mindestens eine Werkstückaufnahme als drehbare Werkstückaufnahme ausgebildet sein, welche um eine parallel zur Rundtischachse verlaufende Werkstückaufnahmeachse drehbar ist. Die Werkstückaufnahme kann somit nach Art eines Rundtisches auf dem die Werkstückaufnahme tragenden Rundtisch ausgebildet sein. Hierdurch wäre es beispielsweise bei der Bearbeitung von Zylinderkurbelgehäusen auch möglich, das Werkstück für die Bearbeitung der Lagergassenbohrung so zu orientieren, dass diese radial zur Rundtischachse verläuft, und das Werkstück für die Bearbeitung einer Reihe von Zylinderbohrungen mittels einer 90°-Drehung so zu orientieren, dass alle Zylinderachsen in einer gemeinsamen Tangentialebene an einem zur Rundtischachse koaxialen Referenzkreis liegen.

Die Anzahl der nutzbaren Vertikal-Honeinheiten kann der Bearbeitungsaufgabe angepasst werden. Bei manchen Varianten weist wenigstens eine Vertikal-Honstation und zwei oder mehr Vertikal-Honeinheiten auf, die zeitgleich arbeiten können, wobei vorzugsweise zwei Vertikal-Honstationen mit jeweils zwei Honeinheiten vorgesehen sind.

Manche Ausführungsformen sind für einen automatischen Werkzeugwechsel ausgelegt, um Honeinheiten (Vertikal-Honeinheiten und/oder Horizontal-Honeinheit) zügig mit unterschiedlichen Honwerkzeugen bestücken zu können, falls beispielsweise beim Verschleiß eines Honwerkzeugs oder aber bei einem Wechsel zwischen unterschiedlichen Honoperationen ein Werkzeugwechsel nötig werden sollte. Hierzu haben manche Ausführungsformen mindestens eine Werkzeugwechseleinrichtung mit einem Werkzeugmagazin, das mehrere Honwerkzeuge aufnehmen kann.

Es ist z.B. möglich, dass eine Werkzeugwechseleinrichtung im Arbeitsbereich eines linear verfahrbaren Schlittens derart angeordnet, dass die vom Schlitten getragene Honeinheit (Vertikal-Honeinheit oder Horizontal-Honeinheit) für einen Werkzeugwechsel zwischen der Honstation und der Werkzeugwechseleinrichtung verfahrbar ist. Es ist auch möglich, eine Werkzeugwechseleinrichtung mit einem verfahrbaren Greifer für einen Werkzeugtransport zwischen Werkzeugmagazin und Honspindel auszustatten.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt eine schrägperspektivische Ansicht einer Honmaschine gemäß einem Ausführungsbeispiel der Erfindung;
Fig. 2 zeigt eine Draufsicht auf die Honmaschine aus Fig. 1;
Fig. 3 zeigt eine Seitenansicht der Längenseite der Honmaschine aus Fig. 1;
Fig. 4 zeigt eine Vorderansicht der Honmaschine von derjenigen Seite, an der die Be- und Entladung der Honmaschine stattfindet;
Fig. 5 zeigt eine Draufsicht auf eine Ausführungsform einer Honmaschine mit einem automatischen Werkzeugwechsler für Honwerkzeuge der Horizontal-Honeinheit; und
Fig. 6 zeigt eine Seitenansicht einer Ausführungsform einer Honmaschine, bei der horizontal verfahrbare Vertikal-Honeinheiten seitlich an dem Maschinenoberteil montiert sind.

### DETAILLIERTE BESCHREIBUNG DER AUSFÜHRUNGSBEISPIELE

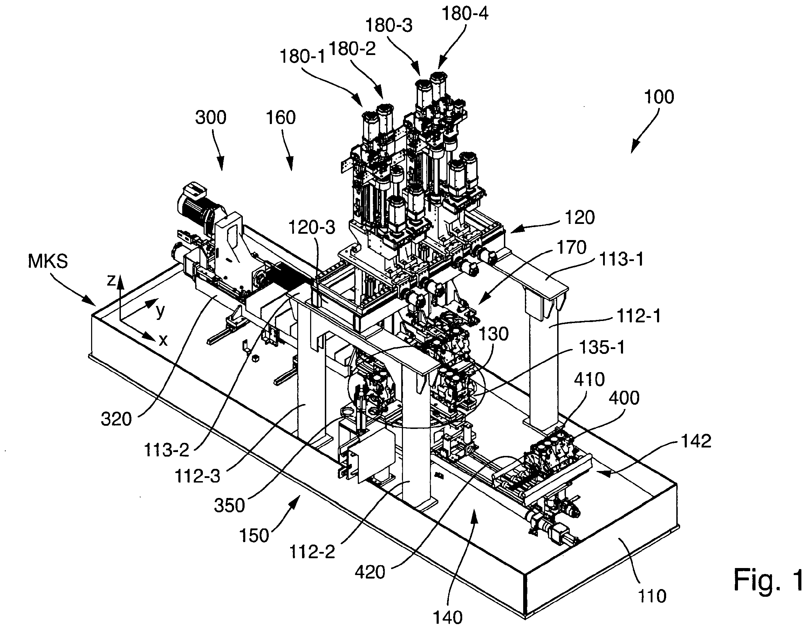

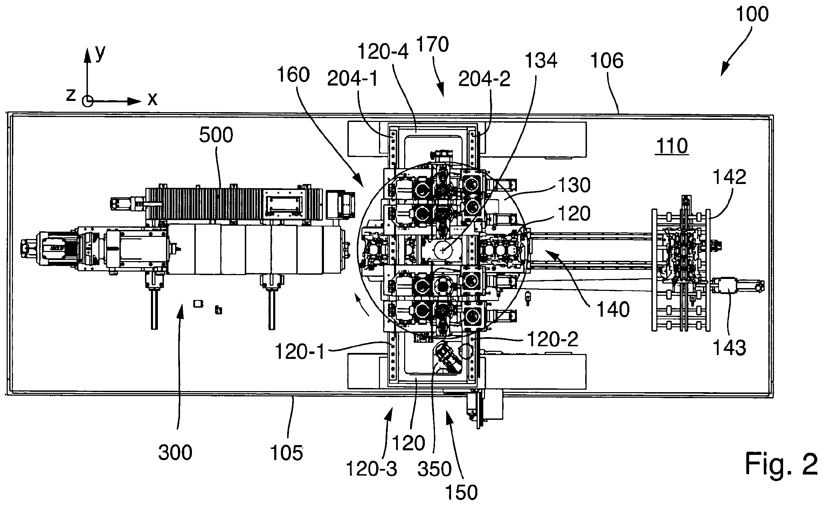

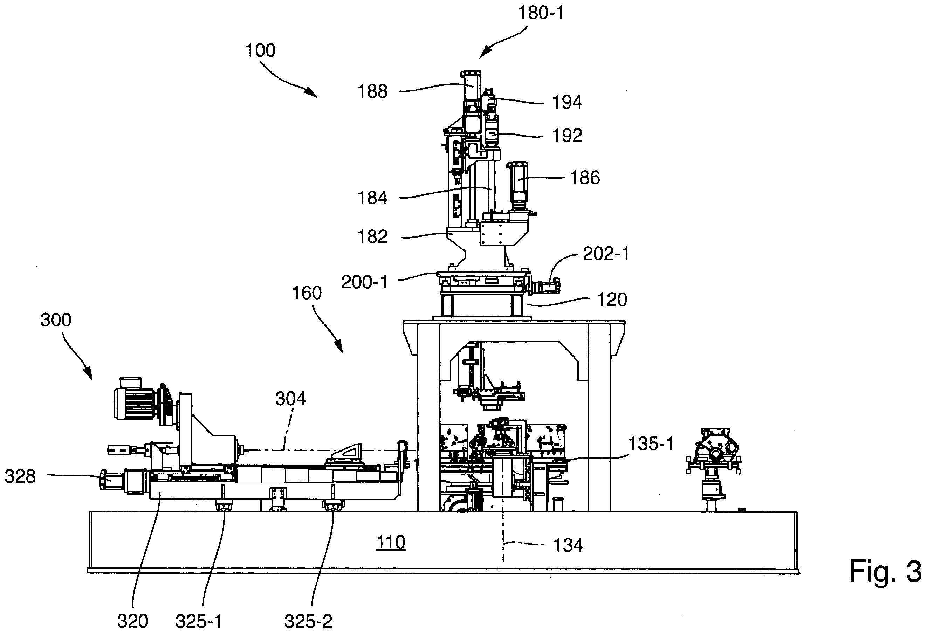

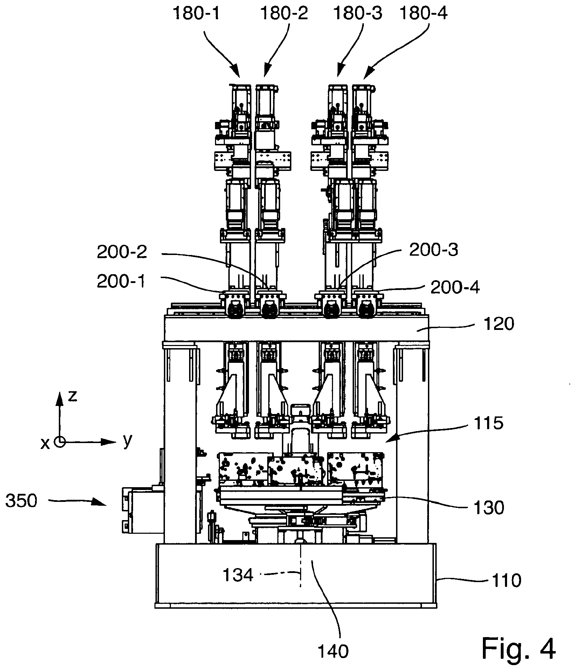

In Fig. 1 ist eine schrägperspektivische Ansicht einer Honmaschine 100 gemäß einem Ausführungsbeispiel der Erfindung gezeigt. Fig. 2 zeigt eine Draufsicht auf die Honmaschine, Fig. 3 eine Seitenansicht der Längenseite und Fig. 4 eine Vorderansicht von derjenigen Seite, an der die Be- und Entladung der Honmaschine stattfindet. Die Honmaschine 100 ist dafür eingerichtet, an Werkstücken mit orthogonal zu einander ausgerichteten Bohrungen an Bohrungen unterschiedlicher Orientierung Honoperationen durchzuführen. Im Beispielsfall ist die Honmaschine dafür eingerichtet, an Werkstücken 400 in Form von Zylinderkurbelgehäusen (Motorblöcken) sowohl die Zylinderbohrungen 410 als auch die zu den Zylinderbohrungen senkrecht ausgerichtete Lagergassenbohrung 420 (Kurbelwellenbohrung) mittels Honen zu bearbeiten.

Die Honmaschine 100 hat eine in Draufsicht rechteckige Maschinenbasis 110, die sämtliche mechanischen Komponenten der Honmaschine trägt. Die in y-Richtung (Querrichtung) des Maschinenkoordinatensystems MKS gemessene Breite der Maschinenbasis beträgt im Beispielsfall 1700 mm und liegt typischerweise zwischen 1500 mm und 2500 mm. Die in x-Richtung (Längsrichtung) gemessene Länge liegt bei 6500 mm. Die schmale Bauform erlaubt einen Transport der komplett vormontierten Maschinenbasis auf üblichen Transportmitteln, zum Beispiel mittels LKW oder Schienenfahrzeug.

Auf der Maschinenbasis ist etwa im mittleren Drittel in Längsrichtung gesehen ein Rundtisch 130 montiert, der mithilfe eines unter dem Rundtisch angeordneten Drehantriebs um eine vertikale Rundtischachse 134 unbegrenzt drehbar ist. An der Oberseite des Rundtisches sind vier Werkstückaufnahmen 135-1 bis 135-4 in gleichen Winkelabständen von 90° zueinander und in gleichen radialen Abständen zur Rundtischachse angebracht. Jede der Werkstückaufnahmen hat Auflageflächen, Indexierelemente und pneumatische Auflagekontrollen und dient zur Aufnahme eines einzelnen Zylinderkurbelgehäuses, welcher in der Werkstückaufnahme fest eingespannt wird. Das Zylinderkurbelgehäuse ist dabei so orientiert, dass die zueinander paral-lelen Zylinderachsen der in Reihe angeordneten Zylinderbohrungen in einer gemeinsamen Vertikalebene liegen, die die Rundtischachse enthält. Die Reihe von Zylinderbohrungen ist also in Radialrichtung zur Rundtischachse orientiert. Bei Ausführungsformen zur Aufnahme von Zylinderkurbelgehäusen für V-Motoren hat eine Werkstückaufnahme noch eine Schwenkeinrichtung.

Der Rundtisch dient als maschineninternes Transfersystem in der Weise, dass ein in einer Werkstückaufnahme aufgenommenes Werkstück durch Drehung des Rundtisches nacheinander an unterschiedliche Arbeitsstationen der Honmaschine transportiert werden kann.

Mithilfe der Honmaschine können bei der hier gewählten Aufteilung des Rundtisches mit vier Werkstückaufnahmen insgesamt vier Arbeitsstationen gleichzeitig durch Werkstücke angefahren werden. Mittig an der in Fig. 4 sichtbaren schmalen Vorderseite liegt die Ladestation 140, deren Einrichtungen dafür vorgesehen sind, jeweils ein Werkstück zu einer leeren Werkstückaufnahme am Rundtisch zu transportieren und/oder ein zu entladendes Werkstück aus einer Werkstückaufnahme nach außen zu transportieren. Für diesen Zweck ist im Beispielsfall ein horizontal verfahrbarer Pendelschlitten 142 vorgesehen, der auf in x-Richtung verlaufenden Schienen geführt ist, die auf der Maschinenbasis 110 montiert sind. Der über einen eigenen Antrieb 143 angetriebene Pendelschlitten kann auf diese Weise zwischen einer inneren Endposition im Bereich einer Werkstückaufnahme und einer äußeren Endposition (in den Figuren gezeigt) hin- und her verfahren werden.

Wie in Fig. 2 zu erkennen ist, ist sowohl die innere Endposition (in der Nähe des Rundtisches) als auch die äußere Endposition (weiter entfernt vom Rundtisch) von oben zugänglich, so dass eine Be- und Entladung des Pendelschlittens von oben zum Beispiel mittels eines Portalgreifers möglich ist.

Durch eine Drehung des Rundtisches um 90° im Uhrzeigersinn kann ein aufgenommenes Werkstück ausgehend von der Ladestation 140 zunächst in eine Bearbeitungsposition an einer ersten Vertikal-Honstation 150 transportiert werden. Diese befindet sich an einer ersten Längsseite 105 der Honmaschine. Eine weitere Drehung um 90° bringt das Werkstück zu einer Horizontal-Honstation 160, die mittig zwischen den Längsseiten der Maschinenbasis liegt. Eine weitere Drehung um 90° bringt ein Werkstück in eine Bearbeitungsposition im Bereich einer zweiten Vertikal-Honstation 170, die sich an der der ersten Längsseite gegenüberliegenden zweiten Längsseite 106 befindet. Eine weitere 90°-Drehung bringt das Werkstück dann wieder in den Bereich der Ladestation 140.

Jede der beiden Vertikal-Honstationen 150, 170 ist mit zwei im Wesentlichen identisch aufgebauten Vertikal-Honeinheiten 180-1 bis 180-4 ausgestattet, die unabhängig voneinander zeitversetzt oder zeitgleich betrieben werden können. Jede der Vertikal-Honeinheiten hat eine einzelne Honspindel, die mithilfe eines Drehantriebs um eine parallel zur Rundtischachse ausgerichtete vertikale Spindelachse drehbar und mithilfe eines Hubantriebs parallel zur Spindelachse hin- und herbewegbar ist. Eine Vertikal-Honeinheit umfasst auch ein Zustellsystem zur radialen Zustellung bzw. zum radialen Zurückziehen von Honelementen, die am Umfang eines von der Honspindel getragenen Honwerkzeugs angeordnet sind.

Der Aufbau einer Vertikal-Honeinheit wird am Beispiel der Vertikal-Honeinheit 180-1 (in Fig. 3 gezeigt) näher erläutert. Die Vertikal-Honeinheit 180-1 umfasst einen Spindelkasten 182, der als Lagerung für die Honspindel 184 dient, die mit vertikaler Spindelachse im Spindelkasten geführt ist. Die Drehung der Honspindel um die Spindelachse wird durch einen Drehantrieb 186 bewirkt, der auf die Honspindel wirkt. Ein Hubantrieb 188 bewirkt die parallel zur Spindelachse verlaufenden Vertikalbewegungen der Honspindel beim Einführen des Honwerkzeugs in die zu bearbeitende Bohrung bzw. beim Herausziehen des Honwerkzeugs aus dieser Bohrung. Außerdem kann der Hubantrieb während der Honbearbeitung so angesteuert werden, dass das Honwerkzeug innerhalb der Bohrung des Werkstücks eine vertikale Hin- und Herbewegung entsprechend der gewünschten Honparameter ausführt.

Die Vertikal-Honeinheit hat ein Zustellsystem, das zwei unabhängig voneinander betätigbare Zustelleinrichtungen umfasst, um ggf. Honwerkzeuge mit Doppelaufweitung ansteuern zu können. Eine erste Zustelleinrichtung hat einen ersten Aufweitantrieb 192 mit einem Servomotor, der auf eine zentrisch durch die Honspindel hindurch laufende Druckstange wirkt und diese axial verschieben kann. Diese Druckstange ist innerhalb einer hohlen Druckstange koaxial mit dieser und relativ zu dieser beweglich angeordnet. Die hohle Druckstange gehört zu einer elektromechanischen zweiten Zustelleinrichtung mit einem elektromechanischen Zustellantrieb 194. Da der Aufbau von doppelt aufweitenden Zustellsystemen an sich bekannt ist, wird auf eine detaillierte Beschreibung hier verzichtet.

Alle Vertikal-Honeinheiten werden durch ein Maschinenoberteil 120 getragen, welches mit vertikalem Abstand oberhalb des Rundtisches 130 angeordnet ist und den Rundtisch in Querrichtung, also parallel zur y-Achse, übergreift. Zum Tragen des Maschinenoberteils 120 dienen vier vertikale Ständer 112-1 bis 112-3, die mittels Schrauben auf der Oberseite der Maschinenbasis befestigt sind. Die Ständer sind in den Eckbereichen eines Rechtecks angeordnet, in welchem die Rundtischachse 134 liegt, so dass der Rundtisch wenigstens zum überwiegenden Anteil innerhalb des von den Ständern begrenzten Raums angeordnet ist. Jeweils zwei an einer gemeinsamen Längsseite angeordnete Ständer tragen eine an ihren oberen Enden befestigte Traverse 113-1, 113-2, welche parallel zur Längsseite (d.h. in x-Richtung) verläuft. Die zueinander parallelen Traversen tragen das horizontal ausgerichtete Maschinenoberteil 120, das sich zwischen den Traversen in y-Richtung erstreckt. Das Maschinenoberteil hat die Form eines rechteckigen Rahmens mit zwei zueinander parallelen, balkenartigen Rahmenelementen 120-1, 120-2, die mit Abstand zueinander in Querrichtung von Traverse zu Traverse verlaufen und an den Traversen über kürzere, in Längsrichtung verlaufende Rahmenelemente 120-3, 102-4 verbunden sind.

Der von den Ständern und dem Maschinenoberteil begrenzte Raum kann als Arbeitsraum 115 der Honmaschine bezeichnet werden. Die in x-Richtung (Längsrichtung) gemessene Breite des Maschinenoberteils beträgt weniger als die Hälfte des in x-Richtung gemessenen Abstands der eine Traverse tragenden Ständer. Das Maschinenoberteil liegt nicht mittig über dem Rundtisch, sondern ist gegenüber der Ladestation 140 nach hinten zurückversetzt, so dass diejenige Werkstückaufnahme, die sich jeweils an der Ladestation 140 befindet, von oben zum Be- und Entladen zugänglich ist (vgl. Fig. 2).

Jede der zu einer Vertikal-Honstation gehörenden Vertikal-Honeinheiten 180-1 bis 180-4 ist jeweils auf einem Schlitten 200-1, 200-2, 200-3, 200-4 montiert, der von dem Maschinenoberteil 120 getragen wird. Die vier Schlitten laufen jeweils auf einem Paar von Führungsschienen 204-1, 204-2, die an der dem Arbeitsraum abgewandten Oberseite des Maschinenoberteils auf den in Querrichtung verlaufenden Rahmenelementen 120-1, 120-2 in Querrichtung, mit lateralem Abstand zueinander verlaufen. Der Rechteck-Rahmen des Maschinenoberteils umschließt eine Ausnehmung, durch die die Honspindel bzw. eine daran angebrachte Antriebsstange nach unten in den Arbeitsraum hineingeführt sind.

Zu jedem Schlitten gehört ein eigener Servomotor (z.B. 202-1), so dass die Schlitten unabhängig voneinander in Querrichtung (y-Richtung) verfahren werden können. Die Spindelachsen der Vertikal-Honeinheiten liegen dabei jeweils in einer die Rundtischachse 134 enthaltenden Vertikalebene, die in y-Richtung bzw. senkrecht zur x-Richtung verläuft. Da die Zylinderbohrungen eines aufgenommenen Zylinderkurbelgehäuses ebenfalls in Radialrichtung zur Rundtischachse aufgereiht sind, ist es aufgrund dieser Anordnung möglich, ohne Verlagerung des Werkstücks an einem Werkstück zunächst eine erste Bohrung zu bearbeiten, die Honspindel dann zurückzuziehen, die Vertikal-Honeinheit als Ganzes in einer Querbewegung parallel zur y-Richtung zu verfahren und koaxial zur einer danach zu bearbeitenden zweiten Bohrung zu positionieren, um mit der gleichen Vertikal-Honeinheit die zweite Bohrung zu bearbeiten.

Um eine Komplettbearbeitung von Zylinderkurbelgehäusen mittels Honen ohne Umspannen des Werkstücks zu ermöglichen, hat die Honmaschine zusätzlich zu den beiden Vertikal-Honstationen (mit jeweils zwei Vertikal-Honeinheiten) noch eine Horizontal-Honstation 160. Zu dieser gehört eine Horizontal-Honeinheit 300, die eine Honspindel hat, welche um eine horizontale Spindelachse drehbar und in Richtung dieser Spindelachse hin- und her bewegbar ist. In den Fig. 1 bis 3 ist die Horizontal-Honeinheit in ihrer Arbeitsposition dargestellt, die sich dadurch auszeichnet, dass die horizontale Spindelachse 304 der horizontalen Honspindel radial zur Rundtischachse 134 ausgerichtet ist. Bei der oben beschriebenen Ausrichtung des Zylinderkurbelgehäuses mit in einer Radialebene liegenden Achsen der Zylinderbohrungen ist die Lagergassenbohrung 420 bzw. Kurbelwellenbohrung so orientiert, dass ihre Längsachse radial zur Rundtischachse verläuft. Somit kann die Lagergassenbohrung mithilfe der Horizontal-Honeinheit bearbeitet werden, wenn ein Zylinderkurbelgehäuse durch Drehen des Rundtisches in die zur Horizontal-Honstation 160 gehörende Bearbeitungsposition gedreht wurde.

Eine Besonderheit dieses Konzepts liegt darin, dass eine gleichzeitige Bearbeitung von Zylinderbohrungen und der Kurbelwellenbohrung weder gewünscht noch möglich ist. Vielmehr wird durch die Anordnung dafür Sorge getragen, dass an jedem Werkstück entweder nur ein oder mehrere Zylinderbohrungen oder die Lagergassenbohrung bearbeitet werden. Gegenüber einer gleichzeitigen Bearbeitung von Zylinderbohrungen und Lagergassenbohrung ergibt sich unter anderem der Vorteil einer höheren Prozesssicherheit und einer höheren Qualität der bearbeiteten Bohrungen, da Bearbeitungsrückstände (z.B. Späne) der einen Bearbeitung (zum Beispiel Bearbeitung der Zylinderbohrung) die Bearbeitung der anderen Bohrung (Lagergassenbohrung) nicht beeinträchtigen können. Vielmehr kann durch die zeitlich nacheinander erfolgende Bearbeitung der orthogonal zueinander verlaufenden Bohrungen sowie ggf. durch einen zwischengeschalteten Reinigungsschritt (z.B. durch Spülen und/oder mittels Pressluft) sichergestellt werden, dass keine Bearbeitungsrückstände eines Bearbeitungsprozesses den anderen Bearbeitungsprozess beeinträchtigen können. Aufgrund des Rundtischtransfers sind dennoch kurze Gesamtbearbeitungszeiten für die Honbearbeitung von Zylinderbohrung und Lagergassenbohrung erzielbar.

Bei dem gezeigten Ausführungsbeispiel ist die Horizontal-Honeinheit auf einem Schlitten 320 montiert, der senkrecht zur horizontalen Spindelachse 304 in Querrichtung der Honmaschine, d.h. parallel zur y-Richtung des Maschinenkoordinatensystems, verfahren werden kann. Hierzu sind auf dem Maschinenbett zwei zueinander parallele Führungsschienen 325-1, 325-2 montiert, auf denen der Schlitten 320 läuft. Zum Antrieb der quer verlaufenden Verfahrbewegung dient ein Servomotor 328, der am Schlitten montiert ist.

Der Schlitten trägt weiterhin eine Messeinheit 500 zum Vermessen der Lagergassenbohrung vor und/oder nach der Honbearbeitung. Die Messeinheit weist eine parallel zur horizontalen Spindelachse 304 axial verfahrbare Messspindel auf, die an ihrem freien Ende einen in die Lagergassenbohrung einführbaren Messkopf trägt.

Möglichkeiten zur Ausgestaltung der Horizontal-Honeinheit sowie zu geeigneten Honwerkzeugen zur Bearbeitung der Lagergassenbohrung und zu geeigneten Werkzeugführungen können ähnlich oder identisch zu denjenigen Lösungen sein, die in der DE 10 2011 079 900 A1 der Anmelderin beschrieben sind. Der Offenbarungsgehalt dieses Dokuments wird insoweit durch Bezugnahme zum Inhalt der vorliegenden Beschreibung gemacht.

Möglichkeiten zum Be- und Entladen eines Pendelschlittens, welcher zum Be- und Entladen eines Rundtisches einer Honmaschine nutzbar ist, werden zum Beispiel in der WO 2013/117482 A1 beschrieben. Weiterhin sind in diesem Dokument Alternativen zur Bestückung mittels Pendelschlitten angegeben, die in gleicher Weise oder mit Modifikationen auch bei Honmaschinen der vorliegenden Anmeldung genutzt werden können. Der Offenbarungsgehalt der WO 2013/117482 A1 wird insoweit durch Bezugnahme zum Inhalt dieser Beschreibung gemacht.

Um die Produktivität zu erhöhen, können Einrichtungen für einen automatischen Werkzeugwechsel sowohl bei den Vertikal-Honeinheiten als auch bei der Horizontal-Honeinheit vorgesehen sein. Bei der Ausführungsform der Fig. 1 bis 4 ist den Vertikal-Honeinheiten 180-1 und 180-2 eine Werkzeugwechseleinrichtung 350 zugeordnet, die ein drehbares Werkzeugmagazin mit mehreren Aufnahmeplätzen für Werkzeuge aufweist. Die Werkzeuge im Magazin befinden sich im Verfahrbereich der beiden an der gleichen Seite angeordneten Vertikal-Honeinheiten 180-1, 180-2, so dass eine Vertikal-Honeinheit für einen Werkzeugwechsel bis in den Bereich des Werkzeugmagazins verfahren werden kann. An der anderen Längsseite ist ein zweites, entsprechendes Werkzeugmagazin angeordnet, das den beiden anderen Vertikal-Honeinheiten 180-3, 180-4 zugeordnet ist. Reicht der Verfahrweg der Vertikal-Honeinheiten in Y-Richtung nicht aus, um eine Positionierung über einem Werkzeugmagazin zu erreichen, kann das Werkzeugmagazin zusätzlich den Vertikal-Honeinheiten in Y-Richtung entgegenfahren. Die Werkzeugmagazine für die Vertikal-Honeinheiten haben dazu zusätzlich zu einer Rotationsachse auch eine translatorische Achse in Y-Richtung.

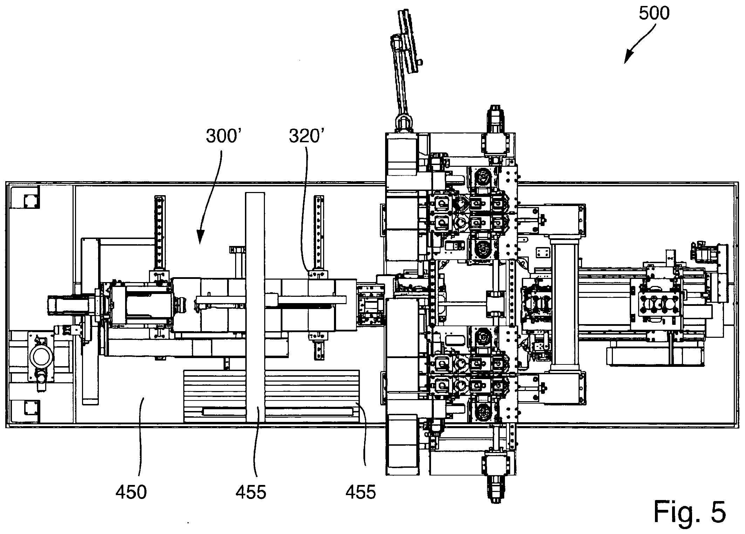

Fig. 5 zeigt in Draufsicht ein Ausführungsbeispiel einer Honmaschine 500. Bei der Honmaschine 500 ist der Horizontal-Honeinheit 300' eine Werkzeugwechseleinrichtung 450 zugeordnet. Diese umfasst ein Werkzeugmagazin 455, welches neben den Führungsschienen für den Schlitten 320' auf dem Maschinenbett angeordnet ist. Oberhalb des Werkzeugmagazins und der Horizontal-Honeinheit verläuft in Querrichtung eine Führungsschiene 455, die einen nicht dargestellten Werkzeuggreifer trägt. Für den Werkzeugwechsel wird zunächst ein auszuwechselndes Honwerkzeug gegriffen, von der Honeinheit entkoppelt und im Werkzeugmagazin abgelegt, danach wird das neue Honwerkzeug gegriffen und in die Ankoppelposition gebracht, wo es mit Honspindel gekoppelt wird.

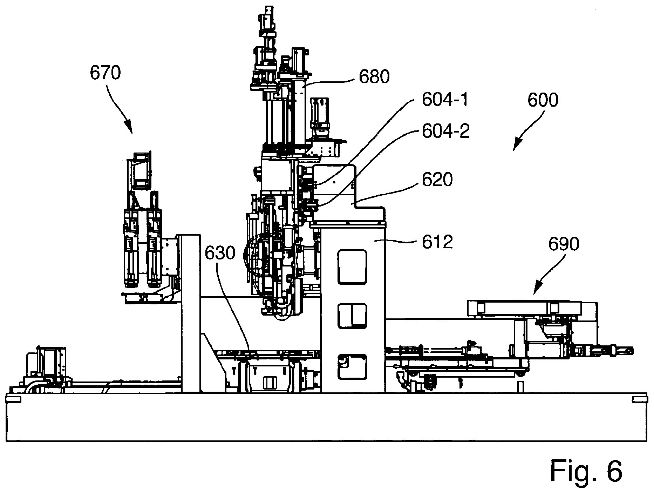

Bei den Ausführungsbeispielen der Fig. 1 bis 5 sind die Schlitten, welche die horizontal verfahrbaren Vertikal-Honeinheiten tragen, auf der Oberseite des Maschinenoberteils montiert. Dies ist jedoch nicht zwingend. Bei dem Ausführungsbeispiel der Honmaschine 600 in Fig. 6 gibt es ein Maschinenoberteil 620, welches mit vertikalem Abstand oberhalb des Rundtischs 630 angeordnet ist und den Rundtisch in Querrichtung (parallel zur y-Achse) übergreift. Das massive Maschinenoberteil wird beidseits des Rundtischs von stabilen vertikalen Ständern 612 getragen. An der der Horizontal-Honeinheit 690 abgewandten Seite des Maschinenoberteils 620 sind horizontale Führungsschienen 604-1, 604-2 montiert, die vier unabhängig voneinander horizontal verfahrbare Schlitten tragen, wobei jeder Schlitten eine der Vertikal-Honeinheiten 680 trägt. Weiterhin ist auf der der Horizontal-Honeinheit gegenüber liegenden Seite des Rundtischs 630 eine Messeinheit 670 angeordnet, die zwei Messspindeln trägt, die für die Vermessung der gehonten Zylinderbohrungen vorgesehen sind.

## Patentansprüche

1. Honmaschine (100) zur Durchführung von Honoperationen an orthogonal zueinander ausgerichteten Bohrungen in einem Werkstück (102), insbesondere zur Honbearbeitung von Zylinderbohrungen und einer Lagergassenbohrung in einem Zylinderkurbelgehäuse, mit:
einer Maschinenbasis (110);
einem auf der Maschinenbasis angeordneten Rundtisch (130), der um eine vertikale Rundtischachse (134) drehbar ist und mehrere Werkstückaufnahmen (135) aufweist, die mit radialem Abstand zur Rundtischachse in Umfangsrichtung zueinander versetzt derart angeordnet sind, dass ein in einer Werkstückaufnahme aufgenommenes Werkstück durch Drehung des Rundtischs nacheinander an unterschiedliche Arbeitsstationen (140, 150, 160) der Honmaschine transportierbar ist; wobei
mindestens eine der Arbeitsstationen eine Vertikal-Honstation (150, 170) ist, die mindestens eine Vertikal-Honeinheit (180) aufweist, welche eine Honspindel hat, die um eine parallel zur Rundtischachse ausgerichtete Spindelachse drehbar in Richtung dieser Spindelachse hin und her bewegbar ist; und
mindestens eine der Arbeitsstationen eine Horizontal-Honstation (160) ist, die mindestens eine Horizontal-Honeinheit (300) aufweist, welche eine Honspindel hat, die um eine horizontale Spindelachse (304) drehbar und in Richtung dieser Spindelachse hin und her bewegbar ist,
wobei die Horizontal-Honeinheit (300) in Bezug auf den Rundtisch (130) derart positioniert oder positionierbar ist, dass die Horizontal-Honeinheit eine Arbeitsposition einnimmt, bei der die horizontale Spindelachse (304) radial zur Rundtischachse (134) ausgerichtet ist.

2. Honmaschine nach Anspruch 1, **dadurch gekennzeichnet, dass** die Horizontal-Honeinheit (300) auf der Maschinenbasis (110) angeordnet ist.

3. Honmaschine nach Anspruch 1 oder 2, **dadurch gekennzeichnet, dass** die Horizontal-Honeinheit (300) an einem Schlitten (320) angebracht ist, der senkrecht zur horizontalen Spindelachse (304) horizontal verfahrbar ist.

4. Honmaschine nach Anspruch 3, **dadurch gekennzeichnet, dass** der Schlitten (320) mindestens eine weitere Funktionseinheit trägt, die vorzugsweise eine weitere Horizontal-Honeinheit oder eine Messeinheit (500) ist.

5. Honmaschine nach einem der vorhergehenden Ansprüche, **gekennzeichnet durch** ein Maschinenoberteil (120), das mit Abstand oberhalb des Rundtischs (130) angeordnet ist, wobei die Vertikal-Honeinheit von dem Maschinenoberteil (120) getragen ist.

6. Honmaschine nach Anspruch 5, **gekennzeichnet durch** mehrere im Randbereich der Maschinenbasis angeordnete vertikale Ständer (112), die das Maschinenoberteil (120) tragen.

7. Honmaschine nach Anspruch 5 oder 6, **dadurch gekennzeichnet, dass** die Vertikal-Honeinheit (180) an einem Schlitten (200) angebracht ist, der von dem Maschinenoberteil (120) getragen wird, wobei der Schlitten vorzugsweise an der Oberseite des Maschinenoberteils angeordnet ist.

8. Honmaschine nach Anspruch 7, **dadurch gekennzeichnet, dass** der Schlitten (200) entlang einer Verfahrrichtung verfahrbar ist, welche parallel zu einer die Rundtischachse (134) enthaltenden Vertikalebene liegt, die senkrecht zur horizontalen Spindelachse (304) der Horizontal-Honeinheit (300) verläuft.

9. Honmaschine nach Anspruch 7 oder 8, **dadurch gekennzeichnet, dass** der Schlitten (200) so angeordnet ist, dass die Spindelachse einer durch den Schlitten getragenen Vertikal-Honeinheit (180) in der Vertikalebene liegen.

10. Honmaschine nach einem der Ansprüche 8 oder 9, **dadurch gekennzeichnet, dass** eine Werkstückaufnahme (135) zur Aufnahme eines Zylinderkurbelgehäuses (400) mit mehreren in Reihe angeordneten Zylinderbohrungen mit zueinander parallelen Zylinderachsen derart ausgebildet ist, dass alle Zylinderachsen in der die Rundtischachse enthaltenden Vertikalebene liegen.

11. Honmaschine nach einem der vorhergehenden Ansprüche, **dadurch gekennzeichnet, dass** wenigstens eine Vertikal-Honstation (150, 170) zwei oder mehr Vertikal-Honeinheiten aufweist, die zeitgleich arbeiten können, wobei vorzugsweise zwei Vertikal-Honstationen (150, 170) mit jeweils zwei Vertikal-Honeinheiten vorgesehen sind.

12. Honmaschine nach einem der vorhergehenden Ansprüche, **dadurch gekennzeichnet, dass** sie für einen automatischen Werkzeugwechsel ausgelegt ist und mindestens eine Werkzeugwechseleinrichtung (350, 450) mit einem Werkzeugmagazin aufweist, das mehrere Honwerkzeuge aufnehmen kann.

## Claims

1. Honing machine (100) for carrying out honing operations on boreholes oriented orthogonally with respect to one another in a workpiece (102), in particular for honing processing of cylinder boreholes and a bearing gate borehole in a cylinder crank casing, having:
a machine base (110);
a round table (130) which is arranged on the machine base and which can rotate about a vertical round table axis (134) and has a plurality of workpiece receptacles (135) which are arranged offset with respect to one another in a circumferential direction at a radial distance from the round table axis, in such a way that a workpiece which is held in a workpiece receptacle can be transported successively to different work stations (140, 150, 160) of the honing machine by rotating the round table; wherein
at least one of the workstations is a vertical honing station (150, 170) which has at least one vertical honing unit (180) which has a honing spindle which can move back and forth in the direction of a spindle axis, which is oriented parallel to the round table axis, rotatably about said spindle axis; and
at least one of the workstations is a horizontal honing station (160) which has at least one horizontal honing unit (300) which has a honing spindle which can move back and forth in the direction of a horizontal spindle axis (304), rotatably about said spindle axis,
wherein the horizontal honing unit (300) is positioned or can be positioned with respect to the round table (130) in such a way that the horizontal honing unit assumes a processing position in which the horizontal spindle axis (304) is oriented radially with respect to the round table axis (134).

2. Honing machine according to claim 1, **characterized in that** the horizontal honing unit (300) is arranged on the machine base (110).

3. Honing machine according to claim 1 or 2, **characterized in that** the horizontal honing unit (300) is attached to a carriage (320) which can be moved horizontally perpendicular with respect to the horizontal spindle axis (304).

4. Honing machine according to claim 3, **characterized in that** the carriage (320) bears at least one further functional unit which is preferably a further horizontal honing unit or a measuring unit (500).

5. Honing machine according to any one of the preceding claims, **characterized by** a machine upper part (120) which is arranged at a distance above the round table (130), wherein the vertical honing unit is borne by the machine upper part (120).

6. Honing machine according to claim 5, **characterized by** a plurality of vertical pillars (112) which are arranged in the edge region of the machine base and bear the machine upper part (120).

7. Honing machine according to claim 5 or 6, **characterized in that** the vertical honing unit (180) is attached to a carriage (200) which is borne by the machine upper part (120), wherein the carriage is preferably arranged on the upper side of the machine upper part.

8. Honing machine according to claim 7, **characterized in that** the carriage (200) can be moved along a movement direction which is parallel to a vertical plane which contains the round table axis (134) and runs perpendicularly with respect to the horizontal spindle axis (304) of the horizontal honing unit (300).

9. Honing machine according to claim 7 or 8, **characterized in that** the carriage (200) is arranged in such a way that the spindle axis of a vertical honing unit (180) which is borne by the carriage lies in the vertical plane.

10. Honing machine according to any one of claims 8 or 9, **characterized in that** a workpiece receptacle (135) for holding a cylinder crank casing (400) is formed with a plurality of cylinder boreholes which are arranged in series and have cylinder axes parallel to one another, in such a way that all the cylinder axes lie in the vertical plane containing the round table axis.

11. Honing machine according to any one of the preceding claims, **characterized in that** at least one vertical honing station (150, 170) has two or more vertical honing units which can operate simultaneously, wherein two vertical honing stations (150, 170) are preferably provided with two vertical honing units each.

12. Honing machine according to any one of the preceding claims, **characterized in that** it is configured for an automatic tool change and has at least one tool changing device (350, 450) with a tool magazine which can hold a plurality of honing tools.

## Revendications

1. Machine de pierrage (100) pour effectuer des opérations de pierrage sur des alésages orientés perpendiculairement les uns aux autres dans une pièce (102), en particulier pour l'usinage de pierrage d'alésages de cylindres et d'un alésage de voie de palier dans un carter-moteur, comprenant :
une base de machine (110) ;
une table ronde (130) disposée sur la base de machine, laquelle peut tourner autour d'un axe de table ronde vertical (134) et présente plusieurs logements de pièce (135) qui sont disposés de manière décalée les uns par rapport aux autres dans la direction périphérique à distance radiale par rapport à l'axe de table ronde de telle sorte qu'une pièce reçue dans un logement de pièce puisse être transportée par rotation de la table ronde successivement à différents postes de travail (140, 150, 160) de la machine de pierrage ;
au moins l'un des postes de travail étant un poste de pierrage vertical (150, 170) qui présente au moins une unité de pierrage verticale (180) qui présente une broche de pierrage qui peut être déplacée de manière à pouvoir tourner autour d'un axe de broche orienté parallèlement à l'axe de table ronde, d'avant en arrière dans la direction de cet axe de broche ; et
au moins l'un des postes de travail étant un poste de pierrage horizontal (160) qui présente au moins une unité de pierrage horizontale (300) qui présente une broche de pierrage qui peut être déplacée de manière à pouvoir tourner autour d'un axe de broche horizontal (304) et d'avant en arrière dans la direction de cet axe de broche,
l'unité de pierrage horizontale (300) pouvant être positionnée ou étant positionnée par rapport à la table ronde (130) de telle sorte que l'unité de pierrage horizontale adopte une position de travail dans laquelle l'axe de broche horizontal (304) est orienté radialement par rapport à l'axe de table ronde (134).

2. Machine de pierrage selon la revendication 1, **caractérisée en ce que** l'unité de pierrage horizontale (300) est disposée sur la base de machine (110).

3. Machine de pierrage selon la revendication 1 ou 2, **caractérisée en ce que** l'unité de pierrage horizontale (300) est montée sur un chariot (320) qui peut être déplacé horizontalement, perpendiculairement à l'axe de broche horizontal (304) .

4. Machine de pierrage selon la revendication 3, **caractérisée en ce que** le chariot (320) porte au moins une unité fonctionnelle supplémentaire qui est de préférence une unité de pierrage horizontale supplémentaire ou une unité de mesure (500) .

5. Machine de pierrage selon l'une quelconque des revendications précédentes, **caractérisée par** une partie supérieure de machine (120) qui est disposée à distance au-dessus de la table ronde (130), l'unité de pierrage verticale étant portée par la partie supérieure de machine (120).

6. Machine de pierrage selon la revendication 5, **caractérisée par** plusieurs supports verticaux (112) disposés dans la région de bord de la base de machine, qui portent la partie supérieure de machine (12 0) .

7. Machine de pierrage selon la revendication 5 ou 6, **caractérisée en ce que** l'unité de pierrage verticale (180) est montée sur un chariot (200) qui est porté par la partie supérieure de machine (120), le chariot étant de préférence disposé au niveau du côté supérieur de la partie supérieure de machine.

8. Machine de pierrage selon la revendication 7, **caractérisée en ce que** le chariot (200) peut être déplacé le long d'une direction de déplacement qui est située parallèlement à un plan vertical contenant l'axe de table ronde (134), lequel s'étend perpendiculairement à l'axe de broche horizontal (304) de l'unité de pierrage horizontale (300).

9. Machine de pierrage selon la revendication 7 ou 8, **caractérisée en ce que** le chariot (200) est disposé de telle sorte que l'axe de broche d'une unité de pierrage verticale (180) portée par le chariot soit situé dans le plan vertical.

10. Machine de pierrage selon l'une quelconque des revendications 8 et 9, **caractérisée en ce qu'**un logement de pièce (135) pour recevoir un carter-moteur (400) comprenant plusieurs alésages de cylindres disposés en rangée avec des axes de cylindre parallèles les uns aux autres est réalisé de telle sorte que tous les axes de cylindre soient situés dans le plan vertical contenant l'axe de table ronde.

11. Machine de pierrage selon l'une quelconque des revendications précédentes, **caractérisée en ce qu'**au moins un poste de pierrage vertical (150, 170) présente deux ou plus de deux unités de pierrage verticales qui peuvent travailler simultanément, de préférence deux postes de pierrage verticaux (150, 170) étant prévus à chaque fois avec deux unités de pierrage verticales.

12. Machine de pierrage selon l'une quelconque des revendications précédentes, **caractérisée en ce qu'**elle est conçue pour un changement d'outil automatique et présente au moins un dispositif de changement d'outil (350, 450) avec un magasin d'outil qui peut recevoir plusieurs outils de pierrage.
